# EUROPEAN PATENT APPLICATION

(11) **EP 4 783 031 A1**
(43) Date of publication of application: **29.07.2026**
(21) Application number: 25154395.5
(22) Date of filing: 28.01.2025
(51) Int. Cl.: G06F 16/901, G06F 16/906

(54) **METHOD AND SYSTEM FOR AUTOMATED GENERATION OF TARGET MAPPINGS OF DATA FOR A DATA LAKE**

(71) Applicant: Siemens Aktiengesellschaft, 80333 München (DE)
(72) Inventor: BALU, Ashwini, 562107 Bangalore, Karnataka (IN); BIGGANAHALLI PUTTASWAMYGOWDA, Rakesh, 560076 Bengaluru (IN); KRISHNAN, Rajkumar, 560100 Bangalore, Karnataka (IN); SUNDARESH, Akash, 560061 Bangalore, Karnataka (IN)
(74) Representative: Patentanwaltskanzlei WILHELM & BECK

(57) **Abstract**

A system for automated generation of target mappings of data for a data lake is disclosed. The system comprises at least one data source (102), the data lake configured to store the target data, and a data processing device (104) for automated generation of target mappings for data lake. The data processing device (104) generates directed graph for the source data based on similar nodes and edges of the source data. The data processing device (104) further generates a connected network of directed graphs based on the similar nodes. The data processing device (104) further generates target mappings based on the connected network.

## Description

The present disclosure relates to data management, and more particularly relates to a method and system automated generation of target mappings of data for a data lake.

As organizations generate and collect vast amounts of data from various sources, data lakes have emerged as a central repository for storing structured, semi-structured, and unstructured data. A data lake allows organizations to store raw data in its native format until needed for analytics, reporting, or other purposes. However, transforming and integrating this raw data into meaningful insights often requires mapping data from multiple, heterogeneous sources to standardized target structures or models.

Traditionally, the process of generating target mappings for a data lake is a manual, time-consuming, and error-prone task. Data engineers and architects must analyze the source data, understand its structure, identify relevant fields, and then map those fields to the corresponding elements in the target schema. As the volume, variety, and velocity of data grow, manually managing and updating these mappings becomes increasingly complex, leading to delays in data utilization and potential inconsistencies in the integration process.

Existing tools lack automation capabilities, and where automation is available, it is limited to domain-specific data sources that follow a relational model. Consequently, these tools function exclusively with relational data sources and are incompatible with other data models. Additionally, tools without automated mapping features rely entirely on user input for creating mappings, resulting in a time-intensive process that requires both functional and technical feasibility assessments.

To address these challenges, there is a growing need for methods that automate the generation of target mappings in a data lake environment.

Therefore, it is an object of the present invention to provide a computer-implemented method for automated generation of target mappings of data for a data lake.

The term "data lake" refers a centralized repository that allows organizations to store large volumes of raw, unstructured, semi-structured, and structured data at any scale. Data lake may store data in its native format, making it readily accessible for various analytical processes without the need for significant transformation.

The term "data source" refers to the origins from which data is generated, collected, or retrieved, serving as the foundational input for creation of data lake. These sources can be categorized as structured, semi-structured, or unstructured, depending on the format and organization of the data. Structured data sources typically include relational databases, where data is stored in predefined schemas, as seen in systems like SQL databases containing customer profiles or inventory records. Semi-structured data sources include XML or JSON files from APIs that offer hierarchical or tagged data without strict schemas, such as social media feeds or sensor data from loT devices. Unstructured data sources are typically more free-form, such as text documents, audio files, and images, often found in emails, customer reviews, or multimedia repositories.

The term "clustering model" refers to a data processing framework designed to classify and organize large sets of data into distinct clusters based on identified similarities or shared attributes. The model functions by analyzing multi-dimensional attributes of the target data, where a clustering algorithm such as K-means, hierarchical clustering, or density-based spatial clustering is applied to identify natural groupings within the data set.

The term "directed graph" refers to a structured data representation consisting of nodes (vertices) and edges (directed links) where each edge has a specified direction, indicating a one-way relationship between two nodes. In a directed graph, an edge from node A to node B signifies that A points to B, establishing a directional dependency or pathway. This directionality enables the modeling of various sequential, hierarchical, or networked relationships between entities, such as in data structures representing workflows, dependency chains, or network topologies.

The term "networking model" refers to a computational framework configured to create a connected network of directed graphs of the source data. The directed graphs with common or similar nodes are connected with each other to form a connected network.

The method for automated generation of target mappings of data for a data lake comprises receiving, by a processing unit, source data from multiple data sources, wherein the source data received is to be stored in the data lake using target mappings of source data. Advantageously, the multiple data sources may be of any type of data model and not restricted to any specific type of data model.

In an embodiment, the source data received from the data sources comprises data from the data fields of the data sources. The source data is not only the metadata but also includes data points from the data fields of the data sources.

The method comprises extracting, by the processing unit, a sample data from the multiple data sources of source data. The processing unit extracts only a part of the data from each of the data sources to obtain the sample data for the source data.

The method comprises creating, by the processing unit, a directed graph using the extracted sample data for each of the data source, wherein the directed graph comprises nodes representing data points of source data with metadata information and edges representing similarity between the data points.

The method comprises identifying, by the processing unit using a clustering model, the nodes from the directed graphs of each of the data sources that are similar.

In an embodiment, the clustering model comprises one of direct matching, probabilistic matching, or fuzzy matching to identify similar nodes for target mappings from the directed graph the data sources. Advantageously, the clustering model aids in identifying similar nodes and enhances the process of automatically generating mappings for the source data.

The method comprises generating, by the processing unit using a networking model 210, a connected network of directed graphs by connecting the similar nodes of the directed graphs of the source data.

The method comprises generating, by the processing unit, target mappings of nodes and edges that are similar to each other based on the connected network of the directed graphs of source data. Advantageously, the automated generation of target mappings for source data negates the human intervention in analyzing the source data to provide relevant mappings.

In an embodiment, the target mappings are generated for the data sources irrespective of the data model of the data sources. Advantageously, the method may generate target mappings for the source data even when the data sources are of different data models.

The method comprises receiving, by the processing unit, an input corresponding to the requirement of the data lake from the user. In other words, the user may provide the purpose and requirement of the data lake based on the business need.

The method comprises determining, by the processing unit using an Artificial Intelligence (Al) model, the nodes and the edges for the data lake based on the input corresponding to the requirement of the data lake received from the user. The AI model automatically determines the nodes and edges for the data lake based on the requirement and purpose of the data lake.

In an embodiment, the Al model is configured to perform semantic analysis on the input received from the user and determine the similar nodes for target mappings of the data lake.

The method comprises refining, by the processing unit using the Al model, the generated target mappings of nodes and edges based on the requirements of the data lake. Advantageously, the target mappings of nodes and edges are refined to determine the appropriate nodes and edges based on the requirement or the purpose of the data lake.

The method comprises extracting, by the processing unit, attributes of the data points from the multiple sources of data, wherein attributes comprise series attribute, category attribute, and generic attribute.

The method comprises prioritizing, by the processing unit, the data points with series attributes for connecting the nodes and the edges to create the directed graph for the data source.

The method comprises validating, by the user, whether the generated target mappings of nodes are similar to each other. The user reviews the generated target mappings to determine the accuracy of the generated target mappings of nodes that are similar to each other.

The method comprises providing feedback, by the user, to validate the clustering model based on the target mappings of the nodes. The user provides feedback based on the accuracy of the generated target mappings of nodes that are similar to each other.

The method comprises updating the clustering model, by the processing unit, based on feedback received from the user. The clustering model is further updated such that the generated target mappings of nodes are similar to each other.

The method comprises updating the networking model 210, by the processing unit, based on the nodes and edges for the data lake determined by the Al model based on the requirements of the data lake received from the user.

The method comprises generating, by the processing unit using the updated networking model 210, target mappings of nodes and edges that are similar to each other based on the connected network of the directed graphs of source data.

The object of the present invention is achieved by a data processing device for automated generation of a target mappings for a data lake. The data processing device comprises one or more processing units, and a memory communicatively coupled to the one or more processing units. The memory comprises a module stored in the form of machine-readable instructions executable by the one or more processing units, wherein the module is configured to perform the method steps mentioned above.

The object of the present invention is achieved by a system for automated generation of target mappings for a data lake. The system comprises at least one data source, the data lake configured to store the target data, and a data processing device for automated generation of target mappings for data lake. The data processing device is configured to perform the method steps mentioned above.

The object of the present invention is achieved by a computer-program product, having computer-readable instructions stored therein, that when executed by a processing unit, cause the processing unit to perform the above-mentioned method steps.

The object of the present invention is achieved by a computer readable medium on which program code sections of a computer program are saved, the program code sections being loadable into and/or executable in a system to make the system execute the above method steps.

The present invention is further described hereinafter with reference to illustrated embodiments shown in the accompanying drawings, in which:
- FIG 1: illustrates a system 100 for automated generation of target mappings for a data lake, according to an embodiment of the present invention;
- FIG 2: illustrates a block diagram of a data processing device 104 for automated generation of target mappings for a data lake, according to one embodiment of the present invention;
- FIG 3: is a flowchart 300 of a method for automated generation of target mappings for a data lake, according to an embodiment of the present invention;
- FIG 4: is a graphical representation 400 of directed graph with sub-graphs, according to an embodiment of the present invention;
- FIG 5: is a flowchart 500 of a method for updating clustering model based on feedback from user, according to an embodiment of the present invention; and
- FIG 6: is a flowchart 600 of a method for updating networking model 210, according to an embodiment of the present invention.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

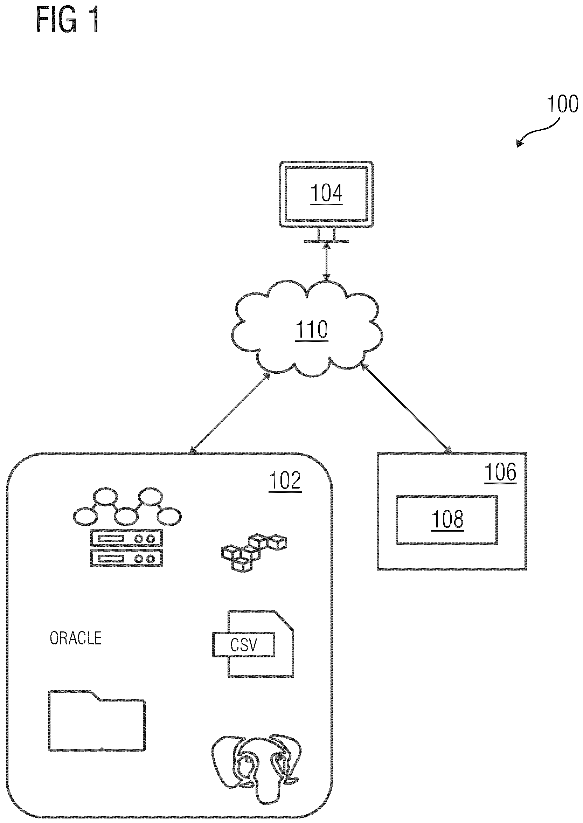

FIG. 1 illustrates a system 100 for automated generation of target mappings for a data lake 106, according to an embodiment of the present invention. The system 100 comprises at least one data source 102, a data processing device 104, a data lake 106, and a communication network 110. The data source 102 and the data lake 106 communicatively interact with the data processing device 104 via the communication network 110.

The communication network 110 may include, but are not limited to, any one or more different types of networks such as, for example, cable networks, public networks (e.g., the Internet), private networks (e.g., frame-relay networks), wireless networks, cellular networks, telephone networks (e.g., a public switched telephone network), cloud based networks, or any other suitable private or public packet switched or circuit switched networks. Such network(s) may have any suitable communication range associated therewith and may include, for example, global networks (e.g., the Internet), metropolitan area networks (MANs), wide area networks (WANs), local area networks (LANs), or personal area networks (PANs).

The data source 102 can include a database, a cloud server, a storage unit comprising the data to be stored in the data lake 106. The data sources 102 can include data that are classified as structured, semi-structured, or unstructured.

The data processing device 104 is configured to receive the data from the data source 102 and process the received data to automatically generate target mappings for the data lake 106. Upon generating the target mappings for the data from the data source 102, the data is then stored in the data lake 106 as target data 108.

Advantageosly, generation of the target mappings for the data lake 106 using the data processing device 104 eliminates the requirement of a human expert to manually analyze the large dataset and create mappings. Therefore, the system 100 reduces the time required in generating target mappings, negates the human error, and improves the accuracy of the target mappings.

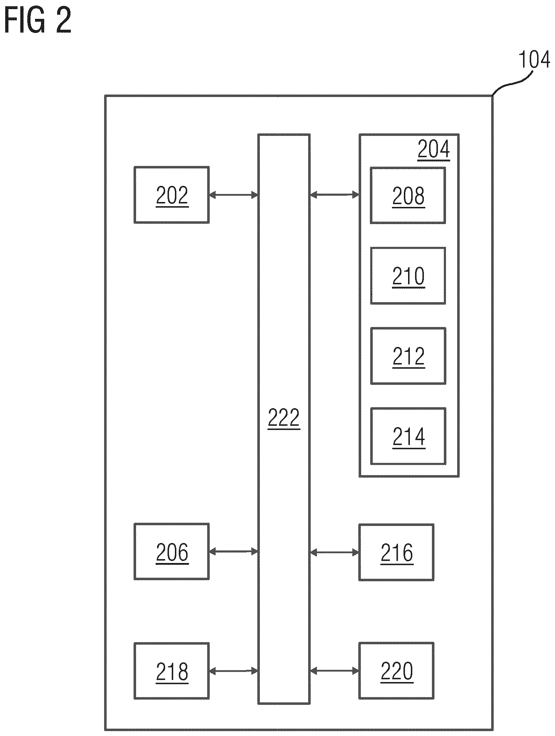

FIG. 2 illustrates a block diagram of a data processing device 104 for automated generation of target mappings for a data lake 106, according to one embodiment of the present invention. The data processing device 104 may include a processing unit 202, one or more memory 204, a database 206, a network interface 216, an input unit 218, and an output unit 220. The data processing device 104 may further include one or more buses that functionally couple various components of the data processing device 104.

The memory 204 may include volatile memory (memory that maintains its state when supplied with power) such as random access memory (RAM) and/or non-volatile memory (memory that maintains its state even when not supplied with power) such as read-only memory (ROM), flash memory, ferroelectric RAM (FRAM), and so forth. Persistent data storage, as that term is used herein, may include non-volatile memory. In certain example embodiments, volatile memory may enable faster read/write access than non-volatile memory. However, in certain other example embodiments, certain types of non-volatile memory (e.g., FRAM) may enable faster read/write access than certain types of volatile memory. In certain example, the database 206 may be equivalent to the memory. In various implementations, the memory may include multiple different types of memory such as various types of static random access memory (SRAM), various types of dynamic random access memory (DRAM), various types of unalterable ROM, and/or writeable variants of ROM such as electrically erasable programmable read-only memory (EEPROM), flash memory, and so forth. The memory may include main memory as well as various forms of cache memory such as instruction cache(s), data cache(s), translation lookaside buffer(s) (TLBs), and so forth. Further, cache memory such as a data cache may be a multi-level cache organized as a hierarchy of one or more cache levels (LI, L2, etc.).

The memory 204 may include a module stored in the form of machine-readable instructions executable by the one or more processing units 202. The memory may include multiple modules such as clustering model 208, networking model 210, Artificial Intelligence (Al) model 212, and feedback module 214. The multiple modules interact with each other for automated generation of target mappings for a data lake 106.

The database 206 may include removable storage and/or non-removable storage including, but not limited to, magnetic storage, optical disk storage, and/or tape storage. The database 206 may provide non-volatile storage of computer-executable instructions and other data.

The database 206 may store computer-executable code, instructions, or the like that may be loadable into the memory and executable by the processing unit 202 to cause the processing unit 202 to perform or initiate various operations such as the operations required for generating recommendations for optimizing a process. The database may store historical data of operational parameters comprising control variables and critical parameters associated with the process in the form of tables or structured knowledge graphs and that may be copied to memory for use by the processing unit 202 during the execution of the computer-executable instructions. Moreover, output data generated as a result of execution of the computer-executable instructions by the processing unit 202 may be stored initially in memory and may ultimately be copied to the database for non-volatile storage.

More specifically, the database 206 is configured to access the memory; and one or more program module, applications, engines, managers, computer-executable code, scripts, or the like such as, for example, the various modules of the memory such as clustering model 208, networking model 210, Artificial Intelligence (Al) model 212, and feedback module 214. Any of the components depicted as being stored in the database 206 may include any combination of software, firmware, and/or hardware. The software and/or firmware may include computer-executable instructions (e.g., computer-executable program code) that may be loaded into the memory for execution by one or more of the processing units 202 to perform any of the corresponding operations described earlier.

The processing unit 202 may be configured to access the memory and execute computer-executable instructions loaded therein. For example, the processing unit 202 may be configured to execute computer-executable instructions of the various program module, applications, engines, managers, or the like of the clustering model 208, networking model 210, Artificial Intelligence (Al) model, and feedback module 214 to cause or facilitate various operations to be performed in accordance with one or more embodiments of the disclosure. The processing unit 202 may include any suitable processing unit 202 capable of accepting data as input, processing the input data in accordance with stored computer-executable instructions, and generating output data. The processing unit 202 may include any type of suitable processing unit 202 including, but not limited to, a central processing unit 202, a microprocessor, a Reduced Instruction Set Computer (RISC) microprocessor, a Complex Instruction Set Computer (CISC) microprocessor, a microcontroller, an Application Specific Integrated Circuit (ASIC), a Field-Programmable Gate Array (FPGA), a System 100 -on-a-Chip (SoC), a digital signal processor (DSP), and so forth. Further, the processing unit 202 may have any suitable microarchitecture design that includes any number of constituent components such as, for example, registers, multiplexers, arithmetic logic units, cache controllers for controlling read/write operations to cache memory, branch predictors, or the like. The microarchitecture design of the processing unit 202 202 may be capable of supporting any of a variety of instruction sets.

The processing unit 202 is configured to receive the source data from multiple data sources 102. The source data may be of any type and originate from any source, wherein the source data received is to be stored in the data lake 106 upon generating target mappings for the source data.

The processing unit 202 is configured to extract a sample data from the multiple sources of source data. Therefore, using a sample data instead of the entire source data enables quicker processing and reduces the time take for generating target mappings.

The processing unit 202 is further configured to create a directed graph using the extracted sample data for each of the data source. The directed graph comprises nodes representing data points of source data with metadata information and edges representing relationship between the data points.

The processing unit 202, using the clustering model 208, identifies the nodes from the directed graphs of each of the data sources 102 that are similar to each other.

The processing unit 202, using a networking model 210, generates a connected network of directed graphs by connecting the similar nodes of the directed graphs of the source data.

The processing unit 202 automatically generates target mappings of nodes and edges that are similar to each other based on the connected network of the directed graphs of source data.

The processing unit 202 further receives an input corresponding to the requirement of the data lake 106 from the user. The input may be in the form of text query defining the requirement of the data lake 106.

The processing unit 202, using an Artificial Intelligence (Al) model, determines the nodes and the edges for the data lake 106 based on the input corresponding to the requirement of the data lake 106 received from the user.

The processing unit 202, using the AI model 212, refines the generated target mappings of nodes and edges based on the requirements of the data lake 106. Thus, the processing unit 202 performs a series of technical steps to automatically generate target mappings for the data lake 106.

The input unit 218 and the output unit 220 may facilitate the receipt of input information by the various modules from one or more I/O devices as well as the output of information from the modules to the one or more I/O devices. The I/O devices may include any of a variety of components such as a display or a display screen having a touch surface or a touchscreen; an audio output device for producing sound, such as a speaker; an audio capture device, such as a microphone; an image and/or video capture device, such as a camera; a haptic unit; and so forth. The I/O devices may further include, for example, any number of peripheral devices such as data storage devices, printing devices, and so forth.

The network interface 216 may include communication links and associated networking devices (e.g., link-layer switches, routers, etc.) for transmitting network traffic over any suitable type of medium including, but not limited to, coaxial cable, twisted-pair wire (e.g., twisted-pair copper wire), optical fiber, a hybrid fiber-coaxial (HFC) medium, a microwave medium, a radio frequency communication medium, a satellite communication medium, or any combination thereof.

The bus 222 may include at least one of a system 100 bus, a memory bus, an address bus, or a message bus, and may permit the exchange of information (e.g., data (including computer-executable code), signaling, etc.) between various components of the data processing device 104. The bus may include, without limitation, a memory bus or a memory controller, a peripheral bus, an accelerated graphics port, and so forth.

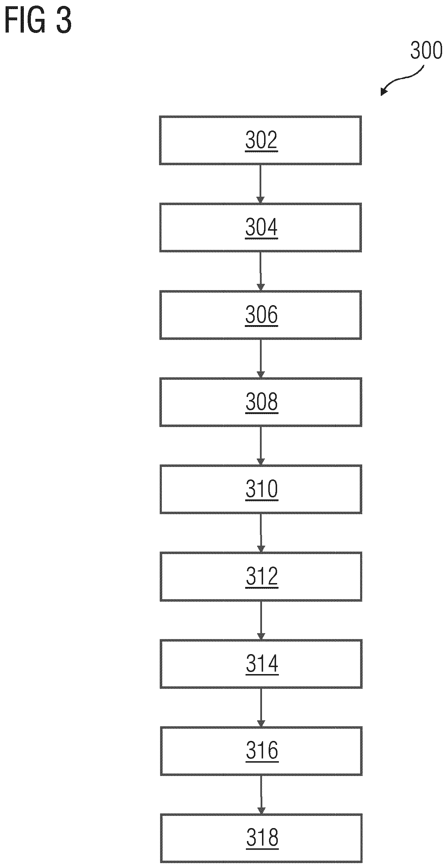

FIG. 3 is a flowchart 300 of a method for automated generation of target mappings for a data lake 106, according to an embodiment of the present invention. At step 302, the processing unit 202 receives source data from multiple data sources 102. As explained earlier, the source data can be of any type such as structured, semi-structured or unstructured. Further, the data source 102 can be a cloud server, a storage unit or a data file. Further, the source data received from the data sources 102 comprises data from the data fields of the data sources 102. Some examples of source data include HR data in an organization, supply chain related data, industrial data, electrical automation data, so on and so forth.

At step 304, the processing unit 202 extracts a sample data from the source data for further processing. Using only a part (sample data) of the entire source data decreases the time required for processing and generating target mappings for the data.

In one embodiment, the processing unit 202 detects columns and headers in the files of source data and extracts attributes of the data points from the multiple sources of data. The attributes comprise series attribute, category attribute, and generic attribute. Further, the processing unit 202 prioritizes the data points with series attributes for connecting the nodes and the edges to create the directed graph for the data source.

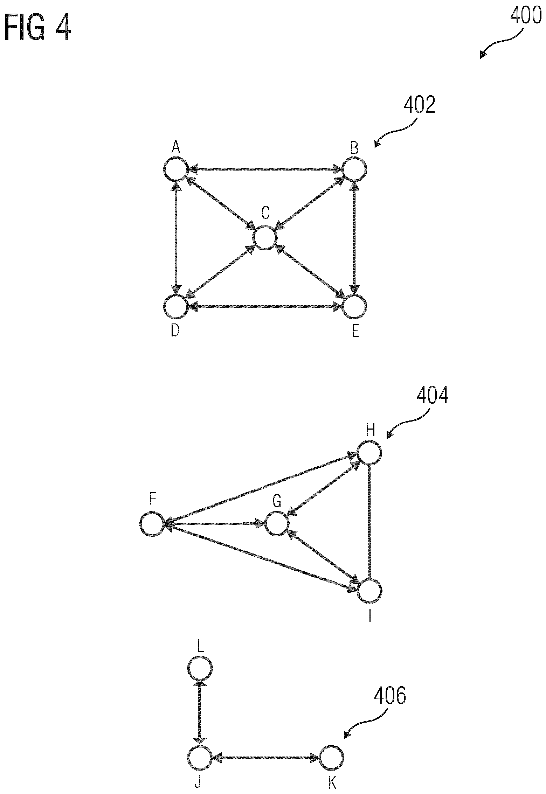

At step 306, the processing unit 202 creates a directed graph using the extracted sample data for each of the data source. The directed graph comprises nodes representing data points of source data with metadata information and edges representing relationship/similarity between the data points (refer FIG. 4). For example, in a logistics source data, route ID in one table may be equivalent to route no. in another table. These nodes are connected to each other through an edge that represents the value of the route ID/route no.

In one embodiment, the directed graph which is generated ignores the string-based data for generating the edges between nodes unless the string-based data relates to a category attribute and not a generic attribute. The series attribute data is given higher importance in connecting the nodes and connect the edges.

At step 308, the processing unit 202 using a clustering model 208, identifies the nodes from the directed graphs of each of the data sources 102 that are similar. To explain it further, the same data may be represented using different terms in different datasets. As an example, in HR data, the field Employee ID in one dataset is same as Employee No. in another dataset. The processing unit 202 identifies such similar nodes on the directed graphs of each of the data sources 102.

In one embodiment, the clustering model 208 comprises one of direct matching, probabilistic matching, or fuzzy matching to identify similar nodes for target mappings from the directed graph the data sources 102.

At step 310, the processing unit 202 using a networking model 210, generates a connected network of directed graphs based on the similar nodes of the directed graphs of the source data. Therefore, a unified directed graph with connected components is generated by the processing unit 202.

At step 312, the processing unit 202 generates target mappings of nodes and edges that are similar to each other based on the connected network of the directed graphs of source data. The target mappings for the data lake 106 are a framework for structure, format, and transformations required to map source data accurately from the source to the destination (data lake 106) thereby meeting the storage and usage requirements in the data lake 106.

Advantageously, the target mappings are generated for the data sources 102 irrespective of the data model of the data sources 102. Therefore, even if the data sources 102 belong to different data types, the method can be used to generate target mappings for the data lake 106.

At step 314, the processing unit 202 receives an input corresponding to the requirement of the data lake 106 from the user. As an example, the user may input a text query describing the usage requirements and purpose of the data lake 106.

At step 316, the processing unit 202 using as Artificial Intelligence (Al) model, determines the nodes and the edges for the data lake 106 based on the input corresponding to the requirement of the data lake 106 received from the user. The nodes and edges that are relevant to the requirements of the data lake 106 are quickly and efficiently determined by the AI model 212 and is used to build the data lake 106.

In one embodiment, the Al model 212 is configured to perform semantic analysis on the input received from the user and determine the similar nodes for target mappings of the data lake 106.

At step 318, the processing unit 202 using the Al model 212, refines the generated target mappings of nodes and edges based on the requirements of the data lake 106. Based on the requirements of the data lake 106, the Al model 212 further refines the target mappings that are already generated by the processing unit 202.

Thus, the computer-implemented method automatically generates target mappings for a data lake 106 and eliminates the requirement of a human expert for identifying mappings.

An example implementation of the present invention specific to technical installation such as an electrical automation system is provided. In an electrical automation system, various components such as transformers, substations so on and so forth are operably connected to a control system such as a SCADA (Supervisory Control and Data Acquisition) system for effective monitoring and management of the electrical system. The control system receives the real-time operational parameters of the electrical automation system and accordingly controls the automation system. Conventionally, in the electrical automation system, the electrical components are operably connected to exchange data with the control system by manually configuring the components using a configurator such as IEC 61850 configurator. The human operator manually determines the target mappings of the source data from the electrical components and accordingly configures the components with the control system.

In the present invention, the processing unit 202 receives source data from multiple data sources such as data corresponding to components such as a transformer, a rectifier, substations, smart meter so on and so forth. Further, directed graphs comprising nodes and edges are created for sample data extracted from the each of the data sources. The processing unit 202, using a clustering model 208, identifies the nodes from the directed graphs of each of the data sources 102 that are similar. As an example, the voltage from a transformer may be equivalent to the voltage in a smart meter. The processing unit 202 identifies such similar data or nodes of the multiple directed graphs using the clustering model.

Further, the processing unit 202, using a networking model 210, generates a connected network of directed graphs by connecting the identified similar nodes of the directed graphs. The connected network serves as a unified graph providing information on similarity of operational parameters of the electrical automation system. For example, a parameter of the smart meter may correspond to a parameter of the control system, wherein such similarity is represented in the connected network. The processing unit then generates the target mappings for the electrical automation system based on the connected network. Therefore, without manual intervention from the user and the configurator, the plurality of components (electrical components) of the technical installation (electrical automation system) is integrated to communicate data between the components of the technical installation. As an example, IEC 61850 products and systems are interoperably engineered without manually configuring the products and systems using the IEC 61850 configurator.

Thus, in the present invention, the components of an electrical automation system are automatically configured using the target mappings of the source data to be operably connected to the control system of the electrical automation system.

FIG. 4 is a graphical representation 400 of directed graph with sub-graphs, according to an embodiment of the present invention. The directed graph includes multiple sub-graphs made by connecting nodes via edges. The subgraph 402 comprises nodes A, B, C, D, and E, and edges A-B, A-D, D-E, B-E, A-C, B-C, C-D, and C-E. All the nodes of the subgraph 402 are connected with each other thereby forming strongly connected components. Similarly, the subgraph 404 comprises nodes F, G, H, and I, and edges F-H, H-I, I-F, F-G, G-H, and G-I. The nodes of the subgraph 404 are connected with each other to form strongly connected components. Further, the subgraph 406 comprises nodes J, K, and L, and edges L-J, and J-K. The nodes of subgraph 406 are not directly connected with each other thereby forming weakly connected component.

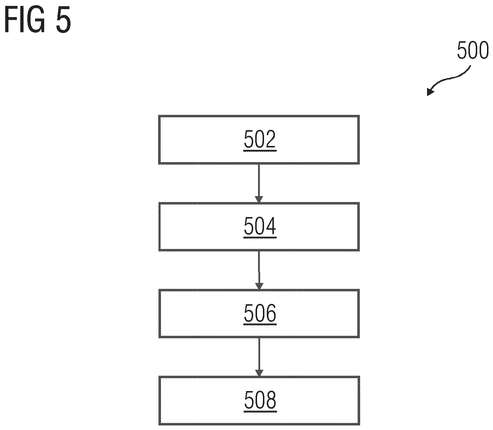

FIG. 5 is a flowchart 500 of a method for updating clustering model 208 based on feedback from user, according to an embodiment of the present invention. At step 502, the processing unit 202 generates target mappings of nodes and edges for the data lake 106 as explained in step 312.

At step 504, the user validates the generated target mappings to determine whether the generated mappings of nodes are similar to each other. The validation may be performed by the user by analyzing the target mappings to determine the accuracy of the mappings.

At step 506, the user provides feedback to the processing unit 202 to validate the clustering model 208 based on the validation of target mappings of nodes.

At step 508, the processing unit 202 updates the clustering model 208 based on the feedback received from the user. Therefore, the updated clustering model 208 improves the process of identification of similar nodes and thereby improving the accuracy of target mappings that are generated. Thus, the process is optimized gradually to ensure better output.

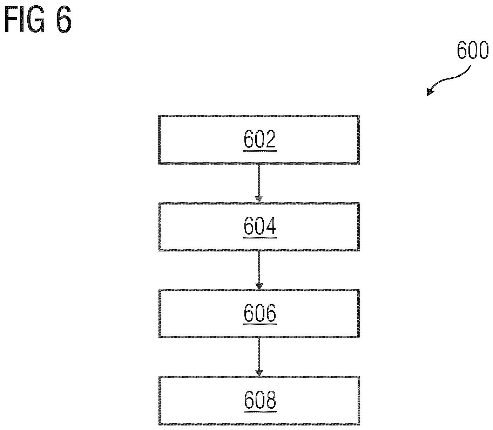

FIG. 6 is a flowchart 600 of a method for updating the networking model 210, according to an embodiment of the present invention. At step 602, the processing unit 202 receives an input corresponding to the requirement of the data lake 106 from the user as explained in step 314. The input may be a text query describing the requirements of the data lake 106.

At step 604, the processing unit 202 using the AI model 212, determines the nodes and edges of the data lake 106 based on the requirements of the data lake 106 received from the user.

At step 606, the processing unit 202 updates the networking model 210 based on the nodes and edges of the data lake 106 determined by the AI model 212. In other words, the networking model 210 is updated to meet the requirements of the data lake 106.

At step 608, the processing unit 202 generates target mappings using the updated networking model 210 such that the generated target mappings align with the requirements of the data lake 106. Thus, the method improves the target mappings generation based on the requirements and purpose of the data lake 106.

The present invention offers a technical advantage of automatically generating target mappings for source data that is to be stored in a data lake. This eliminates the human intervention in manual mappings of data which is tedious and time consuming. Further, the present invention generates target mappings for source data irrespective of the data type of source data.

The proposed invention enables in refining the target mappings of the data lake based on the requirements of the data lake. If the data lake is supposed to serve a specific purpose, then the target mappings are generated to suit the desired requirements of the data lake.

While the invention has been illustrated and described in detail with the help of a preferred embodiment, the invention is not limited to the disclosed examples. Other variations can be deducted by those skilled in the art without leaving the scope of protection of the claimed invention.

### List of references

100 - system for automated generation of target mappings for a data lake
102 - Data source
104- Data processing device
106 - Data lake
108 - Target data
110 - Communication network
202 - Processing unit
204 - Memory
206 - Database
208 - Clustering model
210 - Networking model
212 - AI model
214 - Feedback module
216 - network interface
218 - input unit
220 - output unit
222 - Bus
300 - flowchart of a method for automated generation of target mappings for a data lake
400 - graphical representation 400 of directed graph with sub-graphs
500 - flowchart of a method 500 for updating clustering model 208 based on feedback from user
600 - flowchart of a method for updating the networking model

## Claims

1. A computer-implemented method for automated generation of target mappings of data for a data lake, wherein the method comprises:
receiving, by a processing unit (202), source data from multiple data sources (102),
wherein the source data received is to be stored in the data lake using target mappings of source data;
extracting, by the processing unit (202), a sample data from the multiple sources of source data;
creating, by the processing unit (202), a directed graph using the extracted sample data for each of the data source, wherein the directed graph comprises nodes representing data points of source data with metadata information and edges representing similarity between the data points;
identifying, by the processing unit (202) using a clustering model (208), the nodes from the directed graphs of each of the data sources (102) that are similar;
generating, by the processing unit (202) using a networking model (210), a connected network of directed graphs by connecting the similar nodes of the directed graphs of the source data;
generating, by the processing unit (202), target mappings of nodes and edges that are similar to each other based on the connected network of the directed graphs of source data;
receiving, by the processing unit (202), an input corresponding to the requirement of the data lake from the user;
determining, by the processing unit (202) using an Artificial Intelligence (Al) model (212),
the nodes and the edges for the data lake based on the input corresponding to the requirement of the data lake received from the user; and
refining, by the processing unit (202) using the AI model (212), the generated target mappings of nodes and edges based on the requirements of the data lake.

2. The method according to claim 1, wherein the method comprises:
extracting, by the processing unit (202), attributes of the data points from the multiple sources of data, wherein attributes comprise series attribute, category attribute, and generic attribute; and
prioritizing, by the processing unit (202), the data points with series attributes for connecting the nodes and the edges to create the directed graph for the data source.

3. The method according to any of the preceding claims, wherein the method comprises:
validating, by the user, whether the generated target mappings of nodes are similar to each other;
providing feedback, by the user, to validate the clustering model (208) based on the validation of target mappings of the nodes; and
updating the clustering model (208), by the processing unit (202), based on feedback received from the user.

4. The method according to any of the preceding claims, wherein the target mappings are generated for the data sources (102) irrespective of the data model of the data sources (102).

5. The method according to any of the preceding claims, wherein the source data received from the data sources (102) comprises data from the data fields of the data sources (102).

6. The method according to any of the preceding claims, wherein the method comprises:
updating the networking model (210), by the processing unit (202), based on the nodes and edges for the data lake determined by the AI model (212) based on the requirements of the data lake received from the user; and
generating, by the processing unit (202) using the updated networking model (210), target mappings of nodes and edges that are similar to each other based on the connected network of the directed graphs of source data.

7. The method according to any of the preceding claims, wherein the clustering model (208) comprises one of direct matching, probabilistic matching, or fuzzy matching to identify similar nodes for target mappings from the directed graph the data sources (102).

8. The method according to any of the preceding claims, wherein the AI model (212) is configured to perform semantic analysis on the input received from the user and determine the similar nodes for target mappings of the data lake.

9. The method according to any of the preceding claims, wherein the method comprises:
retrieving, by the processing unit, the generated target mappings corresponding to a technical installation comprising a plurality of components; and
integrating, by the processing unit, the plurality of components of the technical installation to communicate the data between the components of the technical installation.

10. A data processing device (104) for automated generation of a target mappings for a data lake, wherein the data processing device (104) comprises:
one or more processing units (202); and
a memory (204) communicatively coupled to the one or more processing units (202), the memory (204) comprising a module stored in the form of machine-readable instructions executable by the one or more processing units (202), wherein the module is configured to perform the method steps according to claims 1 to 9.

11. A system (100) for automated generation of target mappings for a data lake, wherein the system comprises:
at least one data source (102);
the data lake (106) configured to store the target data (108);
a data processing device (104) for automated generation of target mappings for data lake according to claim in 8, wherein the data processing device (104) is configured to perform method steps according to any of the claims 1 to 9.

12. An electrical system with automated generation of target mappings, wherein the system comprises:
a plurality of electrical components to be interoperably connected;
a control system operably connected to the plurality of electrical components, wherein the electrical components are configured to communicate data with the control system; and
a data processing device according to claim 10, wherein the data processing device automatically configures the plurality of electrical components with the control system to enable communication of data between the electrical components and the control system.

13. A computer-program product, having computer-readable instructions stored therein, that when executed by a processing unit (202), cause the processing unit (202) to perform method steps according to any of the claims 1 to 9.

14. A computer readable medium on which program code sections of a computer program are saved, the program code sections being loadable into and/or executable in a system to make the system execute the method steps according to any of the claims 1 to 9 when the program code sections are executed in the system.
